# EUROPEAN PATENT APPLICATION

(11) **EP 4 604 092 A1**
(43) Date of publication of application: **20.08.2025**
(21) Application number: 24158241.0
(22) Date of filing: 16.02.2024
(51) Int. Cl.: G08C 23/04, H02J 7/32, H02K 7/18, H02N 2/18

(54) **REMOTE CONTROL COMPRISING AN ELECTRIC GENERATOR**

(71) Applicant: Kinergizer IP BV, 2629 JD Delft (NL)
(72) Inventor: Spruit, Johannes Wilhelmus Benjamin, 2629JD Delft (NL)
(74) Representative: Aalbers, Arnt Reinier

(57) **Abstract**

The invention relates to a remote control device (1) comprising a transmitter, such as a Light Emitting Diode (LED), in particular an Infra Red LED, e.g. operating at 38 kHz, a rechargeable electric accumulator (16), such as a rechargeable battery and/or a capacitor, a rotary element(3) operable by an external force, and an electric generator (9) for converting at least part of the rotation of the rotary element (3) to electrical power to be stored in the accumulator (16) and/or to be used to operate the remote control device (1). The remote control comprises an angled and/or offset transmission (4, 5) and a further transmission (8) to increase rotational speed between, on the one hand, the rotary element (3) and, on the other hand, the generator (9).

## Description

The invention relates to a remote control device, in particular a low power remote control device, e.g. having a power consumption in a range from 0.1 microwatt (µW) to 500 milliwatt (mW), comprising a transmitter, such as a Light Emitting Diode (LED), in particular an Infra Red (IR) LED, e.g. operating at 38 kHz, a rechargeable electric accumulator, such as a rechargeable battery and/or a (super)capacitor, a rotary element operable by an external force, typically a plurality of numbered and/or marked buttons to select an instruction, and an electric generator for converting at least part of the rotation of the rotary element to electrical power to be stored in the accumulator and/or to be used to operate the remote control device, e.g. by reading input via buttons or a scroller wheel or disc, and activating the transmitter.

EP 656 612 relates to a method and apparatus for wireless remote control. A transmitter with no batteries receives its operating power from a generator which produces electric energy inductively upon turning or pressing an operating element manually. The same operating element can also be used for determining the direction and degree of control.

US 9,621,008 relates to an inner rotor type small power generator, comprising: a circular stator including a plurality of core windings; a rotor that includes a rotor shaft, in which a driven gear is disposed, and a circular permanent magnet and that is disposed inside the stator; a rotating unit that includes a driving gear and that is rotated by a user at the time of power generation; and a transmission unit that transmits rotation of the driving gear, which is caused by the rotation of the rotating unit, to the driven gear of the rotor shaft through an intermediate gear, wherein at least one rotary shaft of the intermediate gear is disposed outside the rotor within the stator.

WO 98/52272 relates to an electronic apparatus comprising a "new energy-absorption unit [that] allows for the introduction of powerful energy using only one hand and one finger, even if the apparatus is very small. On the front face of the electronic apparatus a sliding element (10) or rotating body (1) is positioned. When the apparatus is used with one hand and one finger it is pressed against the back support surface, the palm or, in the case of miniature apparatus, against the index finger and middle finger. This allows for powerful energy to be introduced even with miniature apparatus.... The invention can be used to supply energy to small and miniature types of electronic apparatus such as remote controls, small measuring apparatus and electronic locks."

It is an object of the present invention to provide a remote control device, e.g. for a television, sound system, or air conditioner, comprising an improved energy harvester.

To this end, the remote control device according to the present invention comprises an angled and/or offset transmission and a further transmission to increase rotational speed between, on the one hand, the rotary element and, on the other hand, the generator, preferably between, on the one hand, the angled and/or offset transmission (driven by the rotary element) and, on the other hand, the generator.

Examples of a rotary element include a scroller wheel, an intermediate rotary wheel (pinion) driven by a slide, e.g. serving as a rack, as will be explained in detail below, and a scroller disc, operable by one or more human fingers, e.g. a thumb or an index finger. Examples of an external force include a force exerted by a human hand and/or finger(s).

Remote controls typically comprise pushbuttons for the user to input an instruction, such as pushbuttons for numbers 0-9, on/off/standby, arrows (up, down, left, right), "OK" (to confirm a selection), volume up and down, channels up and down, "Mute", "Guide", and/or "Back". The remote control according to the present invention comprises, for one or more of these instructions, a rotary element, such as a scroller wheel, an intermediate wheel (pinion) driven by a slide, e.g. serving as a rack, and/or a scroller disc, instead of a pushbutton.

In an embodiment, the further transmission comprises an epicyclic gear train, also known as planetary gear, comprising a sun gear, one or more planet gears on a carrier, and a ring gear.

In an embodiment, the further transmission comprises two or more epicyclic gear trains, e.g. three, four or five epicyclic gear trains, preferably in series and preferably with the rotational axes of the epicyclic gear trains coinciding. In an embodiment, the at least two gear trains are identical, modular and/or nested.

In an embodiment, in at least one of the gear trains, preferably all but one of the gear trains, the sun gear is fixed to, e.g. an integral part of, the carrier of a neighboring planetary gear. E.g. , the sun of the first stage, nearest the input shaft of the further transmission, is fixed to or integral with the carrier of the second stage, and so on. In an embodiment, the sun of the last stage, nearest the generator, is also the driven shaft of the generator or directly fixed to the driven shaft of the generator.

The remote control device, according to the present invention requires no disposable batteries, is capable of highly efficient harvesting and/or enables a compact, e.g. slim design. Further, the transmission according to the present invention provides a tactile quality, e.g. in that it is pleasing to operate.

In an embodiment, at least two of the epicyclic gear trains, preferably all epicyclic gear trains, share a common ring gear, which preferably also functions as a housing for the epicyclic gear trains. This enhances the compactness of the design while delivering high ratio multiplications and providing a cost-effective and modular and/or scalable solution, which facilitates production.

In an embodiment, the further transmission has a ratio in a range from 5 to 1000, preferably in a range from 10 to 800, preferably in a range from 25 to 700.

In an embodiment, the angled and/or offset transmission comprises first and second gears and the axes of the first and second gears cross, intersect and/or extend in parallel.

In a refinement, the first and second gears are bevel gears, e.g. with straight, spiral or zerol tooth lines, and the (imaginary) axes of the first and second gears intersect.

In an embodiment, the first bevel gear is part of, optionally an integral part of, e.g. monolithic with, the rotary element.

In an embodiment, the generator is an electric motor or generator, such as a permanent magnet motor or generator and/or a motor or generator having two or four poles.

Another embodiment comprises two of more generators and further transmissions between the angled and/or offset transmission and each of the generators.

In an embodiment, the rotational axis of the rotary element on the one hand and the rotational axis of the further transmission and/or the generator on the other are offset and extend in parallel.

In an embodiment, the angle between the rotational axis of the rotary element and the rotational axis of the further transmission is in a range from 10 to 170 degrees, preferably in a range from 45 to 135 degrees, preferably in a range from 75 to 105 degrees, e.g. at least substantially right-angled (perpendicular).

In an embodiment, the rotational axis of the further transmission, e.g. the rotational axes of all the epicyclic gear in it, and the rotational axis of the generator coincide.

In an embodiment, the angled and/or offset transmission has a ratio in a range from 0,5 to 5, preferably in a range from 1 to 3.

In an embodiment, the further transmission and the generator are aligned and/or combined to form a unit, preferably having an overall length in a range from 10 to 60 millimeters (mm), preferably in a range from 15 to 40 mm, and/or a maximum diameter in a range from 3 to 12 mm, preferably in a range from 4 to 7 mm.

In an embodiment, the rotary element has an operating torque, e.g. resistance for the user, in range from 2 to 200 milliNewtonmeter (mNm), preferably in a range from 3 to 100 mNm.

In an embodiment, the rotary element, in addition to generating electric energy, performs a function of the device itself, e.g. scrolling through a menu on a remotely operated apparatus, such as operating a television, or setting the temperature on an air conditioner.

In an embodiment, the accumulator has a capacity in a range 1µAh to 3000 mAh.

In an embodiment, the remote control device comprises, in addition to one or more rotary elements, pushbuttons for the user to input instruction, a microcontroller unit (MCU) to process the user instructions into digital messages, and/or an IR transmitter (IR TX) to modulate and transmit the messages.

In an embodiment, the device comprises power management electronics. Such electronics may in turn comprise an ambient energy charging chip (integrated circuit) and/or a diode for one way electric transfer from the generator to the accumulator, such as a rechargeable battery and/or a resistor matched or close to the resistance of the generator to get an optimal power storage and the operating voltage. To ensure bidirectional harvesting a rectifying circuit can be used, such as a diode bridge, a full wave rectifier, or a full wave rectifier with a smoothing capacitor. The energy storage preferably comprises a rechargeable battery, e.g. a 3,6 Volt (V) and/or lithium ion battery, and/or a (super)capacitor, e.g. having a capacity of at least 20 milliFarad (mF), preferably at least 40 mF, if the capacitor is primarily used as a smoothing capacitor or at least 200 mF if the capacitor is (also) used as storage of electricity for operating the remote control.

In an embodiment, the microcontroller, electrical contacts for (and beneath) the pushbuttons, the transmitter and/or the power management electronics are mounted on a Printed Circuit Board (PCB).

The invention also relates to a remote control device, in particular a low power remote control device, comprising a signal transmitter, such as a Light Emitting Diode (LED), in particular an Infra Red (IR) LED, e.g. operating at 38 kHz, a rechargeable electric accumulator, such as a rechargeable battery and/or a (super)capacitor, a rotary element operable by an external force, typically a plurality of numbered and/or marked buttons to select an instruction, and an electric generator for converting at least part of the rotation of the rotary element to electrical power to be stored in the accumulator and/or to be used to operate the remote control device, e.g. by reading input via buttons or a scroller wheel or disc, and activating the signal transmitter, which device comprises an epicyclic gear transmission, comprising a sun gear, one or more planet gears and a ring gear, to increase rotational speed between, on the one hand, the rotary element and, on the other hand, the generator. This remote control device can be combined with one or more of the embodiments discussed above. E.g., in an embodiment, the transmission comprises two or more epicyclic gear trains, e.g. three, four or five epicyclic gear trains, preferably in series and preferably with the rotational axes of the epicyclic gear trains mutually coinciding and/or coinciding with the rotational axis of the generator, and/or the at least two gear trains are identical, modular and/or nested and/or the epicyclic gear transmission has a ratio in a range from 5 to 1000, preferably in a range from 10 to 800, preferably in a range from 25 to 700.

KR 100370949 relates to "a power generation device, wherein an internal gear part (1) is formed on the rear side, and a first planetary gear (3) and a second planetary gear (5) are meshed on the inside of the internal gear part (1), respectively. A rotating body (10) forming a bevel gear portion (7) on the outer peripheral surface, a first bevel gear (15), and a second bevel gear 20 that respectively rotate according to the rotation of the rotating body (10). It rotates according to the rotation of the first bevel gear (15) and the second bevel gear (20), and has a permanent magnet rotating member (30) with a permanent magnet (21) attached to its inner circumferential surface, and a coil (31) to one side of its outer circumferential surface, and a rotor (40) is attached to the tip of the rotating shaft (33) with a pinion (35) meshing with the first planetary gear (3) and the second planetary gear (5) of the rotating body (10). It consists of the first bevel gear (15) and the second bevel gear (20), a permanent magnet rotating member (30), and a channel-shaped support member (50) that rotatably supports the rotor (40)." (Machine translated in Espacenet.)

WO 02/41662 relates to a power supply device for a remote controller, including a ratchet gear having a gear body having a plurality of teeth on its periphery, a rotation member fitted into the inner circumferential surface of the gear body so as to be capable of rotating coaxially with the gear body, a rotation control member installed between the gear body and the rotation member, and a generator.

US 2010/060234 relates to a charging/powering device comprises at least one manually rotatable element, a power generating mechanism coupled to the at least one rotatable element, the power generating mechanism converting rotational movement of said at least one rotatable element into electrical energy and an energy harvesting module collecting and storing the electrical energy generated by the power generating mechanism, the energy harvesting module further being operable to output stored electrical energy.

Examples of the remote control device according to the present invention are explained with reference to the following Figures.
Figure 1 is a perspective view of a remote control according to the present invention comprising a scroller disc.
Figure 2 shows the rear side of the remote control shown in Figure 1, with its rear lid removed.
Figure 3 shows a cross-section of the remote control shown in Figure 2, to illustrate the internals of *i.a.* its planetary transmission.
Figure 4 is a perspective view of the angled transmission used in the remote control shown in Figures 1 to 3.
Figure 5 a perspective view, partly cut open, of another planetary gear and generator for use in a device according to the present invention, such as the remote control shown in Figures 1 to 3.
Figure 6 shows a block diagram of the components of a device according to the present invention.
Figures 7 and 8 are perspective views of another example of a remote control according to the present invention comprising two scroller wheels.
Figures 9 and 10 shows an energy harvester according to the present invention, comprising two slides, each driving an intermediate wheel.

The Figures are schematic, not necessarily to scale and details that are not required for understanding the present invention may have been omitted. The terms "upward", "downward", "below", "above", and the like, relate to the embodiments as oriented in the drawings, unless otherwise specified. Further, elements that are at least substantially identical or that perform an at least substantially identical function are denoted by the same numeral.

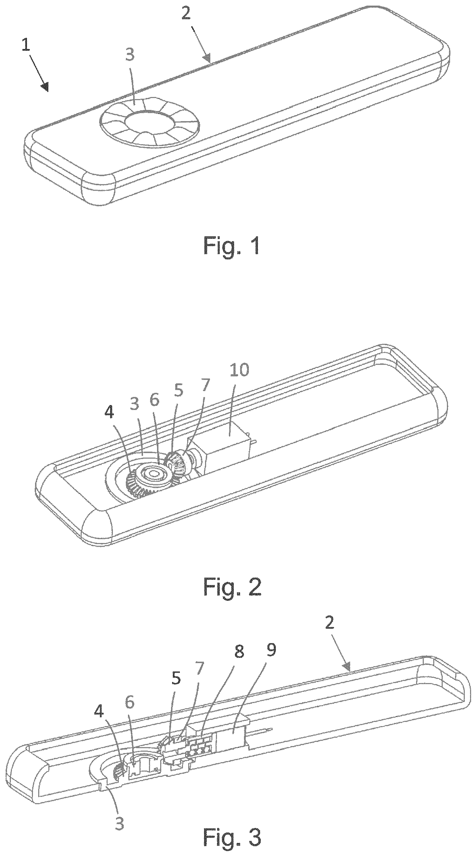

Figure 1 is a perspective view of a remote control 1 for operating e.g. a television and comprising a housing 2 accommodating a rotary operating element e.g. a disc 3 for scrolling through menus on the television. As shown in Figures 2, 3 and 4, on its internal side, the rotary operating element 3 is provided with a first bevel gear 4 that is fixed to or forms an integral part of the rotary element 3 and that meshes with a second bevel gear 5. The (imaginary) axes of the first and second bevel gears intersect at a right angle and both gears are supported by a respective bearings, e.g. sealed ball bearings 6, 7 or roller bearings. The bevel gears and bearings are held in place e.g. by a bridge, block or bracket 10. In addition to providing an angled transmission, the first and second gears provide, in this example, a transmission ratio of 1:2.

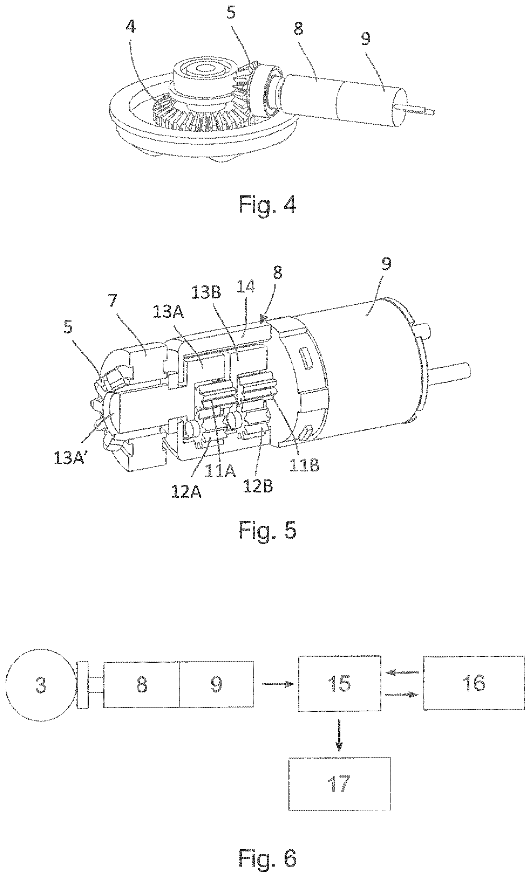

As illustrated in more detail in Figures 3 and 4, the second gear 5 is part of or mounted on the driven axis of a further transmission 8, which further transmission is located between the angled transmission 4, 5 and a generator 9, to increase rotational speed between the rotary element 3 and the generator 9. More specifically, the further transmission comprises two or more planetary gears in series, in the example shown in Figure 3 three nested planetary gears in series, and the generator is an electric motor, such as a permanent magnet motor having two or four poles.

Figure 5 is an enlarged view of another multi-stage planetary gear and generator for used in a remote control device according to the present invention. This example illustrates a smaller second bevel gear, e.g. to increase the transmission ratio of the first and second bevel gears, and a further transmission having two planetary gears, nested and in series . Each of these planetary gear comprises a sun gear 11A, 11B, one or more, e.g. 3, planet gears 12A, 12B, on a carrier 13A, 13B, and a ring gear 14. The carrier 12A of the planetary gear nearest the second bevel gear 5, i.e. the first planetary gear of the further transmission, provides the shaft 13A' on which the second bevel gear 5 is mounted. The carrier 12B of the next planetary gear, i.e. the second planetary gear of the further transmission, is fixed to or forms an integral part with the sun gear 11. A of the first planetary gear, and so on for additional planetary gears, if required. Also, in this example, the ring gears of the planetary gears are formed as a common ring gear 14, which also functions as the housing 8 for the planetary gears.

Figure 6 shows a block diagram of the components of a device according to the present invention, comprising, in addition the angled transmission 4, 5, the further transmission 8, and the generator 9, a power management system 15, a rechargeable battery 16 and the functions 17 of the device, e.g. operating a signal transmitter, such as an Infra Red (IR) LED, e.g. operating at 38 kHz. The power management system 15 comprises an ambient energy charging chip (integrated circuit), such as an e-peas^{™} AEM30300, or a diode for one way electric transfer from the generator to the accumulator, such as a rechargeable battery (not shown) and/or a resistor matched or close to the resistance of the generator to get an optimal power storage and the operating voltage. To ensure or enhance bidirectional harvesting a rectifying circuit can be used, such as a diode bridge, a full wave rectifier, or a full wave rectifier with a smoothing capacitor.

During tests carried out with of the remote control shown in Figures 1 to 3, simulating normal use, the rotor of the generator, coupled to a three stage planetary gear, reached rotational speeds of (100*2*136 =) 27.200 revolutions per minute (rpm) in both the clockwise and counterclockwise direction, providing ample electrical power for initial charging and for uninterrupted use of the remote control.

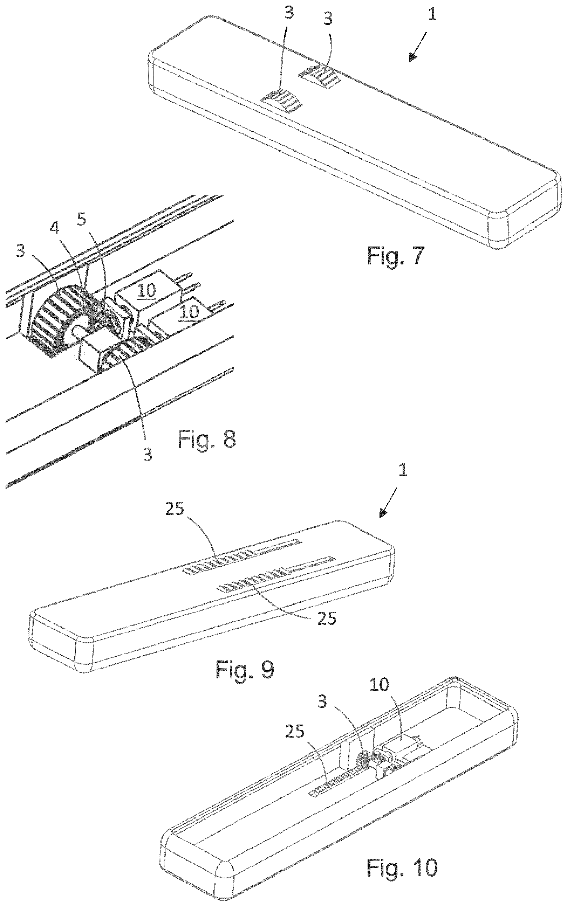

Figures 7 and 8 are perspective views of a remote control 1 according to the present invention, comprising, instead of a scroller disc, two scroller wheels 3, e.g. one to increase and decrease the volume of a television and one to scroll through the channels of a television. Each of the scroller wheels is coupled, via an angled transmission 4,5, to a further transmission and generator.

Figures 9 and 10 are perspective views of a remote control 1 according to the present invention, comprising, instead of a scroller disc, two intermediate wheels 3, e.g. one to increase and decrease the volume of a television and one to scroll through the channels of a television. Each of the intermediate wheels is coupled, via an angled transmission 4,5, to a further transmission and generator in a mounting block 10, and driven a slide 25, e.g. serving as a rack.

The remote control device according to the present invention requires no disposable batteries, is capable of highly efficient harvesting and enables a compact, e.g. slim design, with improve freedom in positioning the harvester relative to others components of the device.

The disclosure is not restricted to the above described embodiments which can be varied in a number of ways within the scope of the claims. E.g., instead of or in addition to a television, the remote control device can be configured to operate a sound system, an air conditioner, a garage door or one or more of the doors of a car.

## Claims

1. Remote control device (1) comprising a transmitter, such as a Light Emitting Diode (LED), in particular an Infra Red LED, e.g. operating at 38 kHz, a rechargeable electric accumulator (16), such as a rechargeable battery and/or a capacitor, a rotary element(3) operable by an external force, and an electric generator (9) for converting at least part of the rotation of the rotary element (3) to electrical power to be stored in the accumulator (16) and/or to be used to operate the remote control device (1), **characterized in** by an angled and/or offset transmission (4, 5) and a further transmission (8) to increase rotational speed between, on the one hand, the rotary element (3) and, on the other hand, the generator (9).

2. Remote control device (1) according to claim 1 or the pre-amble of claim 1, wherein the/a further transmission (8) to increase rotational speed between, on the one hand, the rotary element (3) and, on the other hand, the generator (9) comprises an epicyclic gear train, comprising a sun gear, one or more planet gears and a ring gear.

3. Remote control device (1) according to claim 2, wherein the further transmission (8) comprises two or more epicyclic gear transmissions, preferably in series and preferably with the rotational axes of the epicyclic gear trains coinciding.

4. Remote control device (1) according to claim 2 or 3, wherein at least two of the epicyclic gear trains, preferably all epicyclic gear trains, share a common ring gear, which preferably also functions as a housing for the epicyclic gear trains.

5. Remote control device (1) according to any of the claims 2-4, wherein the further transmission (8) has a ratio in a range from 25 to 1000, preferably in a range from 50 to 800, preferably in a range from 100 to 700.

6. Remote control device (1) according to any of the claims 3-5, wherein the angled and/or offset transmission (4, 5) has a ratio in a range from 0,5 to 5, preferably in a range from 1 to 3.

7. Remote control device (1) according to any one of the preceding claims, wherein the angled and/or offset transmission comprises first and second gears (4, 5) and wherein the axes of the first and second gears (4, 5) cross, intersect and/or extend in parallel.

8. Remote control device (1) according to claim 7, wherein the first and second gears are bevel gears (4, 5).

9. Remote control device (1) according to any of the preceding claims, comprising two of more generators (9) and further transmissions (8) operatively positioned between the angled and/or offset transmission (4, 5) and each of the generators (9).

10. Remote control device (1) according to any of the preceding claims, wherein the angle between the rotational axis of the rotary element (3) and the rotational axis of the further transmission (8) is in a range from 10 to 170 degrees, preferably in a range from 45 to 135 degrees, preferably in a range from 75 to 105 degrees or wherein the rotational axis of the rotary element (3) and the rotational axis of the further transmission (8) and/or the generator (9) are offset and extend in parallel.

11. Remote control device (1) according to any of the preceding claims, wherein the rotational axis of the further transmission (8) and a rotational axis of the generator (9) coincide.

12. Remote control device according to any of the preceding claims, wherein the rotary element has an operating torque in range from 2 to 200 milliNewtonmeter (mNm), preferably in a range from 3 to 100 mNm.

13. Remote control device (1) according to any of the preceding claims, wherein the rotary element (3), in addition to generating electric energy, performs a function of the device itself.

14. Remote control device (1) according to any of the preceding claims, comprising power management electronics(15) in turn comprising an ambient energy charging chip, a diode for one way electric transfer from the generator to the accumulator and/or comprising a resistor matched or close to the resistance of the generator.

15. Remote control device (1) according to any of the preceding claims, wherein the rotary element, such as a rotary element operable by one or more human fingers, e.g. a scroller wheel (3) or a pinion driven by a translating member, such as a slide (25) and/or wherein the external force is exerted by a human hand and/or finger(s).
